Europäisches Patentamt

European Patent Office

Office européen des brevets

(19)

(11) Publication number: **0 101 942**
**A2**

(12) # EUROPEAN PATENT APPLICATION

(21) Application number: **83107416.6**

(22) Date of filing: **27.07.83**

(51) Int. Cl.³: **F 02 C 3/08**
**//F02C6/12**

(30) Priority: **28.07.82 IL 66416**

(43) Date of publication of application:
**07.03.84 Bulletin 84/10**

(84) Designated Contracting States:
**AT BE CH DE FR GB IT LI NL SE**

(71) Applicant: **Orian, Itamar**
**17 Ravina Street Ramat-Aviv**
**Tel-Aviv(IL)**

(72) Inventor: **Orian, Itamar**
**17 Ravina Street Ramat-Aviv**
**Tel-Aviv(IL)**

(74) Representative: **Reinländer & Bernhardt Patentanwälte**
**Orthstrasse 12**
**D-8000 München 60(DE)**

(54) **Gas generator of the turbo-compressor type for low capacity, pressure and temperature.**

(57) As a self-contained heated gases source of low capacity, low pressure and low temperature, a turbo-compressor unit is provided. The unit comprises a centrifugal air compressor having an ambient air inlet and a compressed air outlet, a combustion chamber for the compressed air, and a turbine including a turbine wheel driven by the combustion gases of the combustion chamber. After the starting of the unit, the turbine wheel drives the air compressor. The turbine is provided with exhaust discharge outlet for delivering the product gases of the turbine to the consumer, optionally together with further treatment such as the addition of atomized liquid. The supplied gases may be in a capacity of as low as 5 kg/min., a pressure of 1.00 ata, and a temperature of 150°C.

FIG 1

EP 0 101 942 A2

The present invention relates to gas generators for industrial or domestic purposes. More particularly, the invention concerns a self-contained unit of the turbo-compressor type for the low capacity supply of low-pressure, low-temperature gases.

As used in the present specification, "low-capacity" means a capacity of between 5 and 50 kg/min; "low-pressure" means pressures between 1.00 and 1.60 ata; and "low-temperature" ranges between 150 and $1.500^{\circ}$C, all in a fine and precise regulated manner.

Various industrial processes, or air-conditioning installations, require air or other gases supply at the above specified low rates. For such purposes, use has been exclusively made of burners, boilers, radiators or the like heating systems for heating the gases on one hand, and separate, gas-conveying devices--particularly electrical centrigual blowers--for supplying the consumer with the gases at the required elevated pressure/temperature, on the other hand.

Where higher temperatures and pressures were required, turbo-compressor installations might be used, and it has been found by me, that without exception, such commercially available turbo-based installations are designed for a capacity of over 60 kg/min. and temperatures over $750^{\circ}$ C. Therefore, the general object of the invention to devise turbo-compressor based, self-contained units, for use as a gas generator for the range of the above-specified low rates.

It is a further object of the invention to provide means for readily varying the pressure and/or temperature and/or moisture or other liquid content rates of the product gases of the unit.

It is a still further object of the invention to provide means for introducing atomized liquids into the exhaust gases of the unit.

It is a still further object of the invention to include energy-saving regeneration means into the working cycle of the unit.

According to the invention, there is provided a gas generator unit comprising a centrifugal air compressor having an ambient air inlet and a compressed air outlet, a combustion chamber for the compressed air, a turbine including a turbine wheel driven by the combustion gases of the combustion chamber, the turbine wheel being drivingly coupled to the air compressor, characterized by exhaust discharge means for delivering the turbine product gases from the turbine to a consumer of the gases at a capacity of between 5 and 50 Kg/min, a pressure of between 1.00 and 1.60 ata and a temperature of between 150°C and 1,500°C.

The exhaust means may include an ejector nozzle and an ejector mixing chamber for admixing the turbine product gases with the ambient air, thus lowering the pressure and temperature of the exhaust gases.

The unit may further comprise a second compressor and a second turbine wheel, the second compressor being connected in series with the one compressor to the combustion chamber, and the second turbine wheel is connected in parallel with the one turbine wheel to the combustion chamber.

These and further constructional details and

-3-

advantages of the invention will become more clearly understood in the light of the ensuing description of a few preferred embodiments of the invention, given by way of example
only, with reference to the accompanying drawings, wherein--

Fig. 1 is a schematical view of a first embodiment
of the invention, including an injector/atomizer section for
fuel or liquids at the exhaust side of the unit;

Fig. 2 shows the unit of Fig. 1, but with an
ejector mixing chamber at the exhaust side of the unit;

Fig. 3a shows the unit including energy regenera-
tio means;

Fig. 3b shows the details of the heat-exchanger
included in the embodiment of Fig. 3a;

Fig. 4 shows a unit including two-stages compressing
and a turbine-expansion process;

Fig. 5 shows the unit of Fig. 4, but with a
compressed-air discharge outlet; and

Fig. 6 illustrates the incorporation of a mechanic-
energy-converter into the unit of Fig. 5.

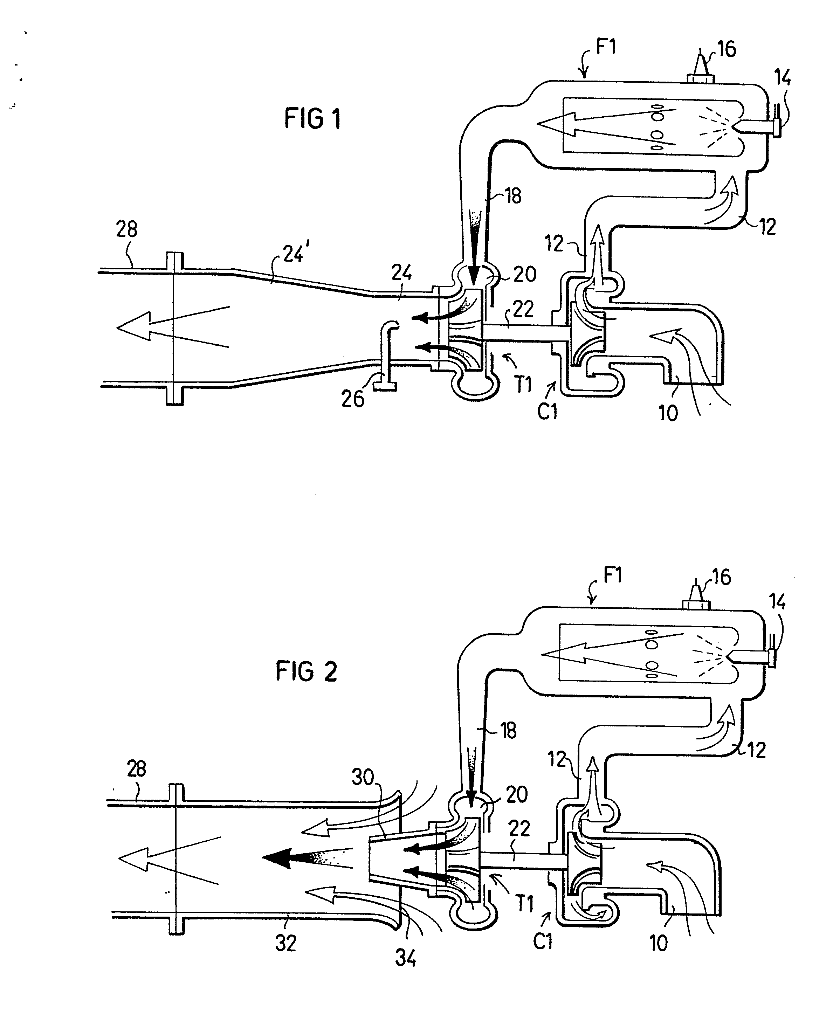

The system of Fig. 1 comprises a centrifugal compres-
sor wheel C1 having an intake manifold 10 for the ambient
air, and a compressed air outlet duct 12 leading to a combustion
chamber F1.  The combustion chamber F1 may be of any known
type, e.g. having a fuel injector 14 and an ignition device 16.
The combustion gases generated within the chamber F1 are
fed through duct 18 to the intake side 20 of turbine wheel T1
for driving the same in the normal, well-known manner.  The
compressor and the turbine wheels are mounted on a common shaft 22, so that after starting of system through the turbo-compressor shaft 22, and when proper combustion conditions prevail in the chamber F1, the impeller of the turbine will become the prime-mover of the compressor C1.

Now, according to the present invention, rather than expelling the combustion gases, which drive the turbine wheel, to the atmosphere - as in all other presently known installations - the product gases of the turbine are fed either directly or with additional processing or treatment thereof, to the end-consumer, in the manners to be described hereinbelow.

According to the embodiment of Fig. 1, the product gases of the turbine are first fed into an injector-atomizer section 24 with a Bernulli nozzle 26. Liquid fed to the nozzle 26 will disperse or become atomized into the flow of the gases, to produce a mixture of such liquid and the product gases. Should it be required, for example, to increase the moisture-content of the gases, water could be introduced in the above form; the same applies to the introduction of other liquid chemical agents for any specific purpose of various industrial processes.

Furthermore, according to another aspect of the present invention, liquid fuel could be injected, which will result an after-burning for elevating to any required extent the temperature of the product gase. Particularly in such cases, it will be advisable to extend the section 24 by a diffuser section 24' for allowing a pressure drop of the product gases, and for transfering the gases in such form to the consumer by suitable ductings 28.

-5-

Typical rates of the exhaust gases produced by the system of Fig. 1 are temperature as low as 500°C, pressures between 1 and 1.3 ata, and capacity as low as 5Kg/min - all well below any other commercially known turbo-compressor installations. With simple regulation, the capacity, temperature and pressure can be changed (increased) into any required value within the specified ranges.

The system illustrated in Fig.2, which is adapted to produce gas at a pressure of between 1.00 and 1.01 ata, at a temperature as low as 150°C, differs with respect to the system of Fig.1, in that it comprises at the outlet side of the turbine T1 an ejector nozzle 30, cooperating with an ejector-mixing-chamber 32, the arrangement being such that ambient temperature air is susked into the ejector-mixing-chamber 32, through an annular entrance 34, and mixes with the turbine product gase.

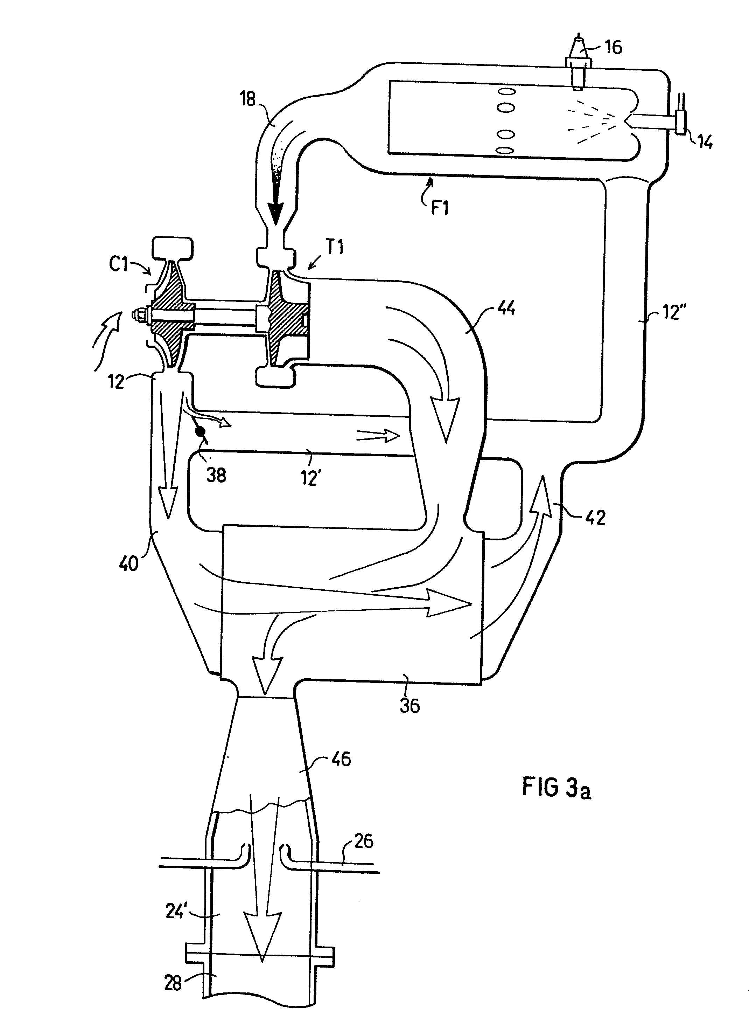

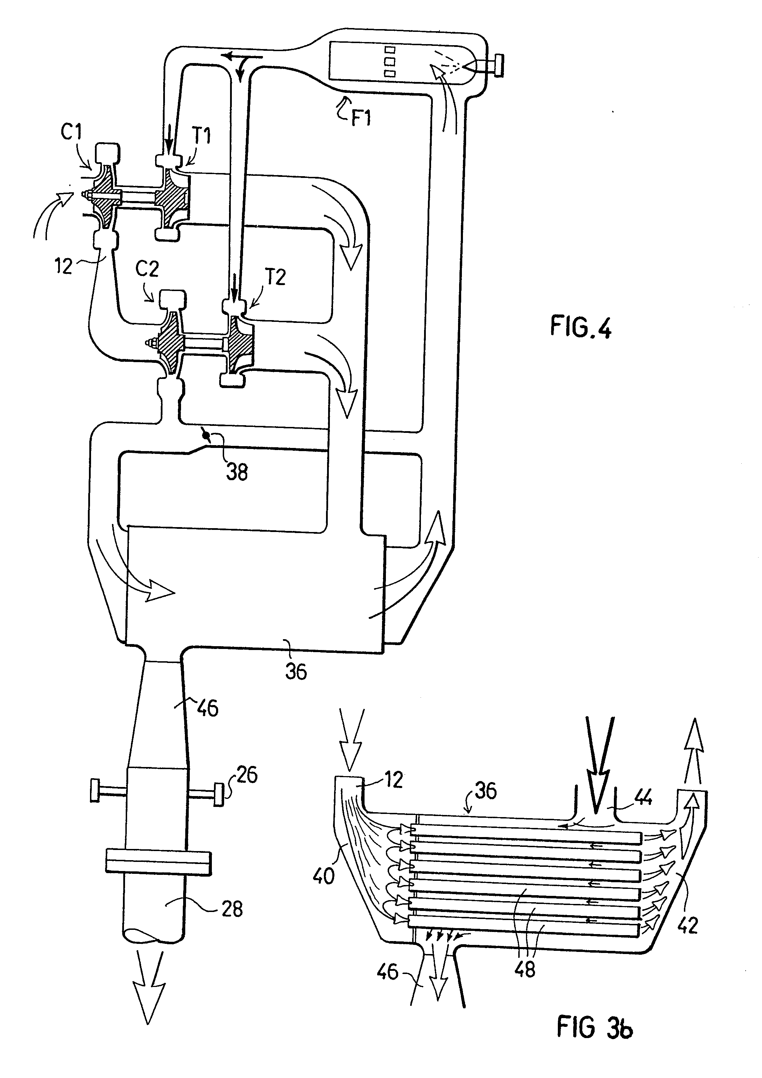

The system of Fig.3a comprises, in addition to the components already discribed with reference to the preceding embodiments, a heat-exhanger 36 into which part of the compressed air is directed by a flap valve 38 for regulating the temperature of the exhaust gases. Hence, part of the compressed air will reach the fuel chamber F1 through ducts 12' and 12", and part will be directed through duct or manifold 40 into the heat exchanger 36 and rejoin the flow of the compressed gas in the duct 12" through an outlet duct 42. On the other hand, the turbine product-gases enter the heat exchanger housing through a duct 44 (see Fig.3b), and leave through a difuser section 46 and, optionally, undergo a second - or after - burning phase within fuel injector-atomizer section 24'. Fig.3b illustrates a preferred embodiment of a heat exhanger, of the multitubes type wherein the compressed gases will flow through a battery of tubes 48, around which the product gases coming from the turbine through duct 44 will flow, to effect the heat exchange between the two mediae. As known, such heat-exchanging or regeneration increases the efficiency of the process.

The unit of Fig.4 is characterized by a two-stages turbo-compressor process, wherein the first compressor C1 is connected in series with a second compressor C2, the latter being mounted on a same shaft 50 with a second turbine impeller T2 which is connected in parallel with the first turbine wheel T1. Whereas the unit of Fig. 3a would typically supply product gases at pressures up to 1.3 ata, the two-stages compressing by the system of Fig. 4, would normally produce a gas pressure as high as 1.6 ata. Variations of temperature and pressures can then be effected by proper design of the difuser section 46 and the liquid fuel injectors 26, in the manner already described with reference to the embodiment Fig.1.

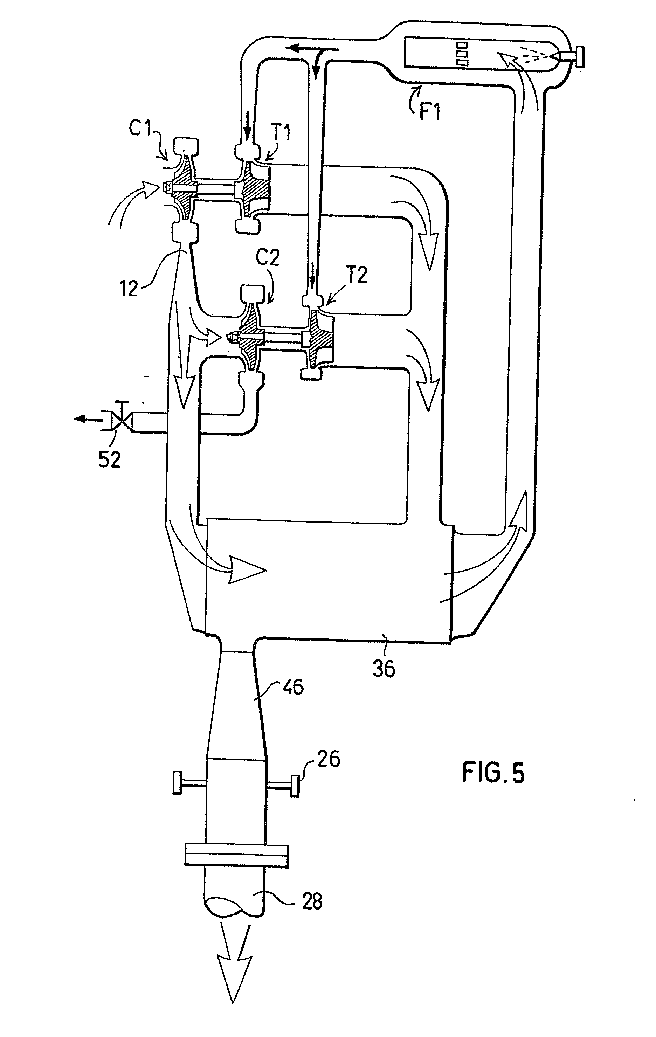

Fig.5 illustrates the use of the second compressor C2 as a source of oil-free compressed air, selectively tapped off through valve 52.

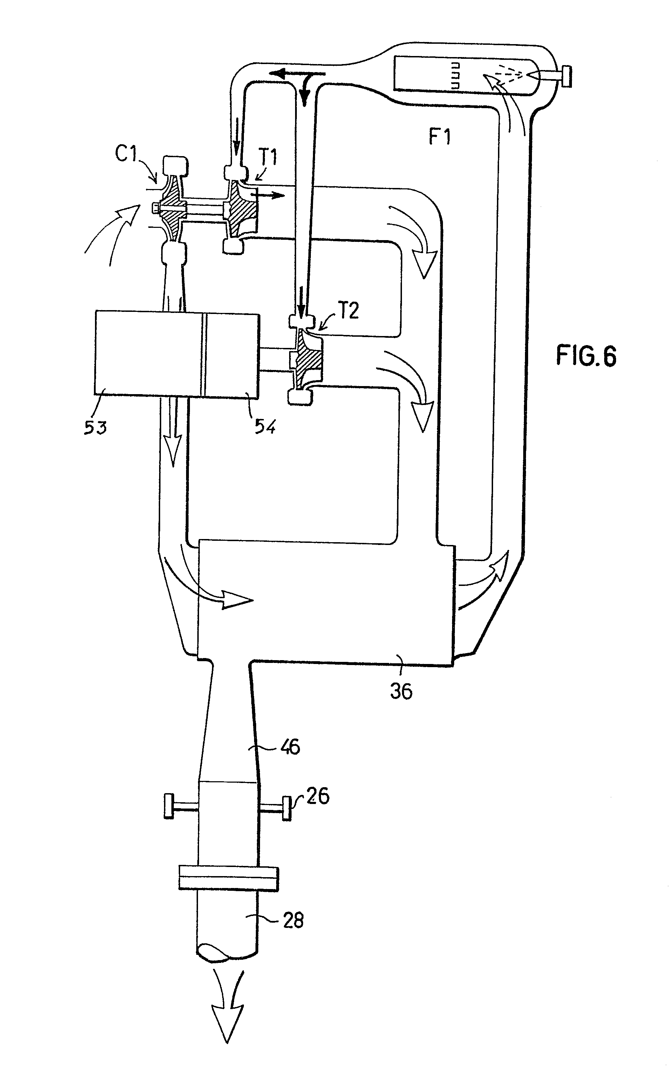

The system illustrated in Fig.6 constitutes a so-called "total energy unit", namely which is adapted to supply - besides gas at elevated pressures and temperatures - also mechanical power produced by the torque of the turbine impeller T2 as schematically represented by device 53 ("Mechanical Energy Conventer"), preferably through a reduction gear transmission 54.

Those skilled in the art will readily appreciate that the unit devised according to the teachings of the present invention provides a unique and heretofor unknown combination of the turbo-compressor driving system functioning as a gas generator for specific requirements of low-capacity and supply of low-pressure and low-temperature purified (oil-free) air, with a wide range of additional features as above specified, all in a most efficient and energy-conserving way, as contrasted by the wasteful use of electric blows and combustion-operated steam boilers or other heaters.

The readily applicable use of ejector nozzles and difusers renders the use of the new unit simple, effective and less costly in terms of construction, maintanence and control expenditures.

Many modifications, variations and changes may be applied to the numerous embodiments of the invention as given above, such changes and modifications should be regarded as falling within the scope of the invention as defined in and by the appended claims.

WHAT IS CLAIMED IS:

1. A gas generator unit comprising a centifugal air compressor having an ambient air inlet and a compressed air outlet, a combustion chamber for the compressed air, a turbine including a turbine wheel driven by the combustion gases of the combustion chamber, the turbine wheel being drivingly coupled to the air compressor, characterized by exhaust discharge means for delivering the turbine product gases from the turbine to a consumer of the gases at a capacity of between 5 and 50 Kg/min, a pressure of between 1.00 and 1.60 ata and a temperature of between 150°C and 1,500°C.

2. The unit as claimed in Claim 1 wherein the compressor and the turbine wheel are coupled to each other.

3. The unit as claimed in Claim 2 wherein the compressor and the turbine wheel are mounted on a common driveshaft.

4. The unit as claimed in Claim 3 wherein the exhaust means include a liquid injector-atomizer chamber

5. The unit as claimed in Claim 4 wherein the liquid is fuel for an after-burning of the turbine product gases.

6. The unit as claimed in Claim 5 further comprising difuser means for dropping the pressure of the after-burnt exhaust gases.

7. The unit as claimed in Claim 1 wherein the discharging means include an ejector-nozzle and an ejector mixing chamber for admixing the turbine product gases with the ambient air, thus lowering the pressure and temperature of the exhaust gases.

8. The unit as claimed in Claim 1 further comprising heat-exchanging means between the exhaust gases and the compressed air.

9. The unit as claimed in Claim 8 wherein the heat-exchanging means comprise a battery of tubes through which the compressed air flows and around which the exhaust gases flow.

10. The unit as claimed in Claim 1 further comprising a second compressor and a second turbine wheel, the second compressor being connected in series with the one compressor to the combustion chamber, and the second turbine wheel is connected in parallel with the one turbine wheel to the combustion chamber.

11. The unit as claimed in Claim 10 further comprising a mechanical energy converter.

12. The unit as claimed in Claim 11 wherein the converter is driven by the second turbine wheel, couple to a torque take-off means through a reduction transmission.

FIG 1

FIG 2

FIG 3a

C1

T1

F1

12

C2

T2

FIG.4

38

36

46

26

28

12

36

44

40

42

46

48

FIG 3b

FIG.5

FIG.6